# EUROPÄISCHE PATENTSCHRIFT

(11) **EP 1 698 928 B1**
(45) Veröffentlichungstag und Bekanntmachung des Hinweises auf die Patenterteilung: **18.02.2009**
(21) Anmeldenummer: 06004125.8
(22) Anmeldetag: 01.03.2006
(51) Int. Cl.: G02B 21/00

(54) **Verfahren zum Speichern der Koordinaten zu beleuchtender Bereiche einer Probe in der Mikroskopie**
Method for storing coordinates of regions of interest of a sample to be illuminated in microscopy
Procédé destiné à mémoriser les coordonnées de positions à éclairer d'un échantillon en microscopie

(30) Priorität: 04.03.2005 DE 102005010490; 07.10.2005 DE 102005048481; 10.01.2006 DE 102006001427
(43) Veröffentlichungstag der Anmeldung: 06.09.2006
(73) Patentinhaber: Leica Microsystems CMS GmbH, 35578 Wetzlar (DE)
(72) Erfinder: Widzgowski, Bernd, 69221 Dossenheim (DE)
(74) Vertreter: Siepe, André

(56) Entgegenhaltungen:
- EP-A- 1 085 292
- WO-A-20/05017597
- US-A- 4 907 158
- US-A1- 2003 179 445

## Beschreibung

Die vorliegende Erfindung betrifft ein Verfahren zum Beleuchten einer Probe oder eines Bereichs der Probe (Region Of Interest, ROI), mittels eines Konfokalmikroskops, wobei die Information, ob und auf welche Weise ein konkreter Punkt auf der Probe beleuchtet werden soll, in einem Datenspeicher unter einer konkreten Adresse abgelegt ist.

Verfahren der eingangs genannten Art werden in der Praxis insbesondere bei der Konfokalmikroskopie eingesetzt. Dabei wird eine Probe mit einem meist durch einen Laser erzeugten Lichtstrahl zeilen- oder meanderförmig abgetastet. Zur Vermeidung einer Zerstörung der Probe werden jedoch lediglich bestimmte Bereiche der Probe, die Region Of Interest (ROI), beleuchtet. Da der Lichtstrahl bedingt durch die Trägheit der Lichtstahllenkung die gesamte Probe überstreicht, wird der Lichtstrahl in Abhängigkeit der Position auf der Probe in seiner Intensität moduliert. Die Informationen, ob ein Punkt einer Probe beleuchtet werden soll, sind in einem Speicher abgelegt und werden dort basierend auf die Position des Lichtstrahls ausgelesen. Die Steuerdaten werden dann dem Lichtmodulator zugeführt.

Handelt es sich bei der beleuchteten Probe beispielsweise um Zellen in einer wässrigen Lösung, so bleibt die Position, Orientierung und Gestalt der Probe oder der ROI nicht konstant. Die Änderungen der Probe werden durch Anpassung der Intensitätsdaten in dem Speicher abgebildet. Dabei kann jedoch eine Aktualisierung von großen Bereichen des Speichers notwendig werden. Da die Aktualisierung und das Auslesen des Speicherinhalts jedoch parallel und in Echtzeit erfolgen müssen, werden hohe Anforderungen an die Geschwindigkeit des eingesetzten Speichers gestellt.

Besonders problematisch wird dies, wenn Proben mit einer hohen Frame-Rate abgetastet werden sollen. In diesem Fall stoßen die verfügbaren Speicher schnell an die Grenze ihrer Leistungsfähigkeit und erreichen beachtliche Preise. Zudem sind für die Berechnung des neuen Speicherinhalts besonders leistungsfähige Prozessoren notwendig.

Aus der US 2003/179445 A 1 ist eine Vorrichtung zum Analysieren von Proben bekannt, die mehrere interessante Bereiche (Fields Of Interest, FOIs) aufweist. Mehrere Betriebsmodi sind möglich. Nach einem Betriebsmodus werden die einzelnen FOIs der Probe physisch und/oder elektronisch markiert, um die Bereiche bei einer späteren Beobachtung wieder finden zu können. Dabei kann die Probe prinzipiell beliebig auf dem Tisch des Mikroskops für die Beobachtung platziert werden.

Die bekannte Vorrichtung stößt jedoch dann an ihre Grenzen, wenn es innerhalb der Probe zu einer Bewegung kommt. Befinden sich beispielsweise lebende Zelle in einer wässrigen Lösung, so kann in Folge einer Eigenbewegung oder von thermischen Bewegungen eine Zelle innerhalb der Lösung seine Position, Orientierung oder möglicherweise auch Gestalt verändern. Damit können sich die FOIs verschieben oder in ihrer Gestalt verändern. Derartige Veränderungen der Probe können jedoch mit der bekannten Vorrichtung nicht berücksichtigt werden.

Aus der EP 1 085 292 A 1 ist ein Verfahren und eine Vorrichtung zum Bestimmen einer Transformation von Objektkoordinaten in Beobachtungskoordinaten bekannt. In einem ersten Beobachtungsgerät werden drei Beobachtungspunkte zufällig ausgewählt und die Probe an diesen Punkten markiert. Nach dem Platzieren der Probe in dem zweiten Beobachtungsgerät werden die markierten Punkte gesucht und mit dem Koordinatensystem des zweiten Beobachtungsgeräts in Verbindung gebracht. Dazu werden Transformationsvorschriften bestimmt, mittels deren die Koordinaten der Punkte in dem ersten Beobachtungsgerät in die Koordinaten in dem zweiten Beobachtungsgerät überführt werden können.

Aus der EP 1 085 292 A1 ist ebenso für sich gesehen ein Verfahren zur Beleuchtung einer Probe sowie - für sich gesehen - die Durchführung einer Koordinatentransformation bekannt.

Der vorliegenden Erfindung liegt nun die Aufgabe zugrunde, ein Verfahren zum Beleuchten einer Probe oder eines Bereichs einer Probe anzugeben, bei dem Veränderungen der Probe oder von Teilen der Probe bei gleichzeitig möglichst geringen Anforderungen an die eingesetzte Hardware berücksichtigt werden können.

Erfindungsgemäß wird die voranstehende Aufgabe durch ein Verfahren mit den Merkmalen des Patentanspruchs 1 gelöst. Danach ist das aus der Praxis bekannte Verfahren zum Beleuchten einer Probe oder einer ROI, dadurch gekennzeichnet, dass eine Positions-, Orientierungs- und/oder Gestaltsänderung der Probe aufgenommen wird und dass daraus eine Transformation der Koordinaten der zu beleuchtenden Bildpunkte erfolgt, dass den transformierten Koordinaten Speicheradressen eindeutig zugeordnet werden, und dass unter Zugrundelegung der Speicheradressen auf den Datenspeicher zugegriffen und dessen Inhalt zur Steuerung der Lichtquelle ausgelesen wird.

In erfindungsgemäßer Weise ist zunächst erkannt worden, dass zur Aktualisierung der Parameter zur Steuerung der Lichtquelle in Abkehr von dem aus der Praxis bekannten Verfahren nicht der gesamte Speicherinhalt aktualisiert werden muss. Vielmehr ist es erfindungsgemäß möglich, die Änderungen der Probe oder der ROI durch eine Veränderung von Transformationsvorschriften abzubilden. Erfindungsgemäß werden mit diesen Transformationsvorschriften die Koordinaten der zu beleuchtenden Bildpunkte an die Veränderungen der Probe oder der ROI angepasst. Den transformierten Koordinaten der zu beleuchtenden Bildpunkte werden dann eindeutig Speicheradressen zugeordnet, mit denen auf den Datenspeicher zugegriffen werden kann und schließlich die Informationen zur Steuerung der Lichtquelle an den ausgewählten Speicherstellen ausgelesen werden können.

In vorteilhafter Weise resultiert die Änderung der Position, der Orientierung und/oder der Gestalt der Probe in einer Verschiebung, einer Drehung, einer Stauchung und/oder einer Dehnung der Probe selbst. Die Gestalt der Probe kann sich selbstständig ändern. In diesem Falle wäre die Änderung der ROI eine Reaktion darauf.

Die Änderungen können vorzugsweise durch Transformation der Koordinaten der zu beleuchtenden Bildpunkte mittels konformer Abbildungen nachgebildet werden. Dabei werden bevorzugt Verschiebungen, Drehungen und Skalierungen eingesetzt. Mit diesen Transformationen wird der aktuelle Aufbau der Probe Punkt für Punkt in einen Bildbereich der ROI oder in ein Referenzbild allgemein überführt. In beiden Fällen handelt es sich um meist zu Beginn der Messung definierte Bezugsbereiche oder punkte.

In vorteilhafter Weise lässt sich das erfindungsgemäße Verfahren auf Proben mit mehreren ROI übertragen. Dabei wird die Veränderung jeder einzelnen ROI mit einer separaten Transformationsvorschrift nachgebildet, wobei jede einzelne Transfomationsvorschrift im Allgemeinen unterschiedlich parametriert sein wird und/oder unterschiedlich aufgebaut sein kann. So kann bspw. eine Transformationsvorschrift lediglich aus einer Verschiebung bestehen, während eine andere Transformationsvorschrift aus einer Verschiebung, einer Drehung und einer Skalierung zusammengesetzt ist.

Hinsichtlich einer möglichst einfachen und praktikablen Einsatzweise können die Parameter der einzelnen Transformationen vorzugsweise automatisch, kontinuierlich und/oder in Echtzeit an die Änderungen der Probe oder der ROI angepasst werden. Im zeitlichen Ablauf könnten Bilder von der Probe oder von Teilen der Probe aufgenommen werden. Die Änderungen können beispielsweise mit einer Kamera oder einem Scanner aufgenommen werden. Die aufgenommenen Bilder werden danach mittels Bildverarbeitungssystem analysiert. Die Daten werden einem weiteren System zur Bestimmung der geänderten Parameter der Transformation zugeführt. Vorzugsweise werden die Parameter in Registern abgelegt, deren Inhalt die Systeme zur Transformation der Koordinaten der zu beleuchtenden Punkte nutzen können.

Hinsichtlich einer besonders leistungsfähigen Umsetzung des Verfahrens ist der Datenspeicher vorzugsweise in mehrere Speicherbereiche unterteilt, wobei alle oder zumindest einige der ROI einer Probe in getrennte Speicherbereiche abgebildet werden. Vorzugsweise sind die Speicherbereiche nicht nur logisch, sondern auch physikalisch voneinander getrennt. Damit können die einzelnen Transformationen für jedes ROI vollständig unabhängig und insbesondere sich nicht gegenseitig blockierend ausgeführt werden.

Hinsichtlich der Steuerung der Lichtquelle kann zum einen um eine Veränderung der Intensität erfolgen, zum anderen kann das Spektrum und/oder die Formgebung eines von der Lichtquelle ausgesandten Lichtbündels beeinflusst werden. Die einzelnen Parameter zur Steuerung der Lichtquelle sind in dem Datenspeicher abgelegt und werden vorzugsweise zur Laufzeit oder zumindest über einige Abtastzyklen hinweg nicht verändert.

Bei der Änderung der Probe oder der ROI ist es möglich, dass sich überschneidende ROI auftreten. In diesem Fall wird für jede ROI ein getrennter Satz von Parametern zur Steuerung der Lichtquelle bestimmt und der zur Steuerung der Lichtquelle verwendete Wert durch Mittelwert- oder Summenbildung der einzelnen Werte ermittelt. Insbesondere bei der Summenbildung werden dabei beispielsweise zur Vermeidung einer unzulässig hohen Lichtintensität die einzelnen Parameter auf einen Bereich zwischen einem Minimal- und einem Maximalwert beschränkt.

Hinsichtlich einer besonders guten Integrationsfähigkeit eines Systems zur Durchführung des erfindungsgemäßen Verfahrens ist es möglich, das System in einen CPLD- oder FPGA-Baustein mit mehreren internen Speichern zu implementieren. Dadurch ist der Aufbau einer besonders leistungsfähigen Einheit mit mehreren parallelen Prozessoren möglich. Die Transformation der Koordinaten der zu beleuchtenden Punkte kann in besonders vorteilhafter Weise mit digitalen Signalprozessoren durchgeführt werden, die ebenso in den erwähnten Bausteinen integrierbar sind.

Es gibt nun verschiedene Möglichkeiten, die Lehre der vorliegenden Erfindung in vorteilhafter Weise auszugestalten und weiterzubilden. Dazu ist einerseits auf die nachgeordneten Ansprüche, andererseits auf die nachfolgende Erläuterung eines bevorzugten Ausführungsbeispiels der erfindungsgemäßen Lehre anhand der Zeichnung zu verweisen. In Verbindung mit der Erläuterung des bevorzugten Ausführungsbeispiels der erfindungsgemäßen Lehre anhand der Zeichnung werden auch im Allgemeinen bevorzugte Ausgestaltung und Weiterbildungen der Lehre erläutert. In der Zeichnung zeigt
- Fig. 1: in einer schematischen Darstellung den Ablauf des aus der Praxis bekannten Verfahrens und
- Fig. 2: in einer schematischen Darstellung den Ablauf des erfindungsgemäßen Verfahrens,

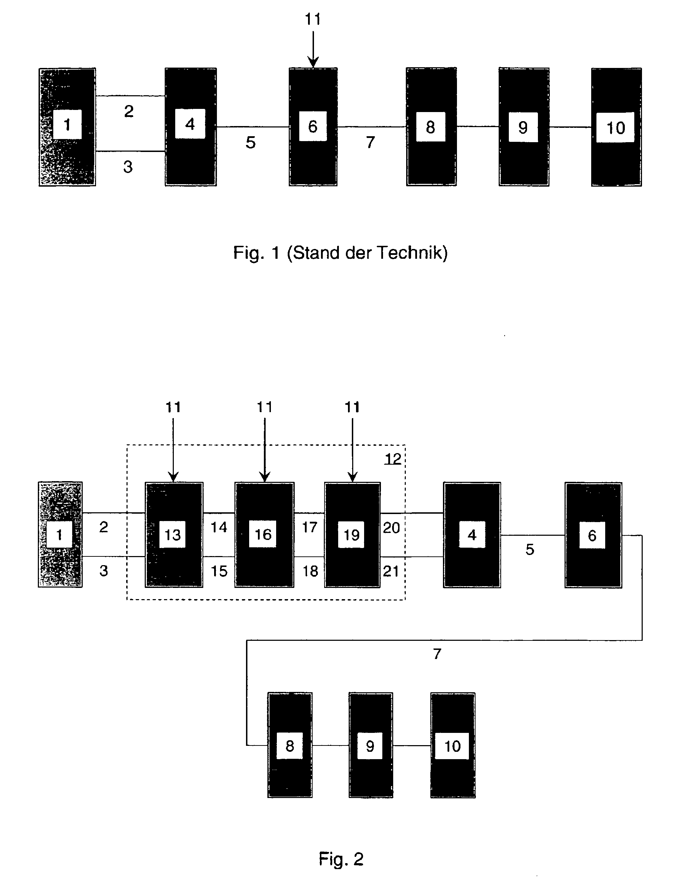

Fig. 1 zeigt in einer schematischen Darstellung den logischen Ablauf bei dem aus der Praxis bekannten Verfahren. Hierbei liefert die Ablenkelektronik des Laserstrahls 1, die die Position des Laserstrahls auf der Probe für deren zeilenförmige Abtastung steuert, jeweils einen Wert für die x-Position 2 und die y-Position 3 des Laserstrahls. Diese beiden Werte werden einem Adressgenerator 4 zugeführt, der daraus eine Speicheradresse 5 in dem Speicher 6 generiert. In dem Speicher 6 sind Intensitätsdaten 7 abgelegt, mit denen über das Interface 8, den Treiber 9 und den Kristall 10 die Intensität des Lichtstrahls beeinflusst wird. Bei dem Interface 8, dem Treiber 9 und dem Kristall 10 kann es sich um AOTF-Bausteine handeln. Bei dem aus der Praxis bekannten Verfahren wird eine Änderung der Probe oder eines Bereichs der Probe dadurch abgebildet, dass eine Anpassung 11 des Inhalts des Speichers 6 vorgenommen wird.

Das erfindungsgemäße Verfahren ist in einer Implementierung schematisch in Fig. 2 dargestellt. Dabei wurden für sich entsprechende Komponenten dieselben Bezugszeichen wie in Fig. 1 verwendet. Auch hier liefert die Ablenkelektronik des Laserstrahls 1 die beiden Werte für die x-Position 2 und die y-Position 3 des Laserstrahls, die Ausgangspunkt für das Verfahren bilden. Die dadurch definierte Position des Laserstrahls wird nun einer affinen Abbildungen 12 unterzogen, die hier aus einer Verschiebung 13, einer Drehung 16 und einer Skalierung 19 bestehen. Die aus der Verschiebung 13 erhaltenen Werte für die x-Position 14 und y-Position 15 werden einer Drehung 16 unterworfen, die weiter transformierte Werte für die x-Position 17 und die y-Position 18 liefert. Die abschließende Skalierung liefert die vollständig transformierten Werte für die x-Position 20 und y-Position 21 nach den affinen Abbildungen, die dann wiederum mittels eines Adressgenerators 4 einer Adresse 5 zugeordnet werden. Mit dieser Adresse 5 wird schließlich auf den Speicher 6 zugegriffen und die dort enthaltenen Intensitätsdaten 7 ausgelesen. Diese Intensitätsdaten 7 werden wieder über ein Interface 8, einen Treiber 9 und einen Kristall 10 zur Beeinflussung der Intensität des Lichtstrahls genutzt. Die Nachbildung der Veränderung der Probe oder einzelne Bereiche der Probe wird hierbei durch Anpassung 11 der einzelnen affinen Abbildungen 12 durchgeführt.

Hinsichtlich weiterer vorteilhafter Ausgestaltungen des erfindungsgemäßen Verfahrens wird zur Vermeidung von Wiederholungen auf den allgemeinen Teil der Beschreibung sowie auf die beigefügten Patentansprüche verwiesen.

Schließlich sei ausdrücklich darauf hingewiesen, dass das voranstehend beschriebene Ausführungsbeispiel lediglich zur Erörterung der beanspruchten Lehre dient, diese jedoch nicht auf dieses Ausführungsbeispiel einschränkt.

## Patentansprüche

1. Verfahren zum Beleuchten einer Probe oder eines Bereichs der Probe (Region Of Interest, ROI) mittels eines Konfokalmikroskops, wobei die Information, ob und auf welche Weise ein konkreter Punkt auf der Probe beleuchtet werden soll, in einem Datenspeicher (6) unter einer konkreten Adresse (5) abgelegt ist,
**dadurch gekennzeichnet, dass** eine Positions-, Orientierungs- und/oder Gestaltsänderung der Probe infolge von Bewegungen innerhalb der Probe in Form von Bildern aufgenommen wird und dass daraus eine Transformation (13, 16, 19) der Koordinaten (2, 3) der zu beleuchtenden Bildpunkte mittels einer Transformationsvorschrift erfolgt, wobei die Transformationsvorschrift die Änderung der Probe bezüglich eines früheren Zustands der Probe beschreibt und wobei die Transformationsvorschrift in Abhängigkeit der Änderung der Probe in Echtzeit angepasst (11) wird, dass den transformierten Koordinaten (20, 21) eindeutig Speicheradressen (5) zugeordnet (4) werden und dass unter Zugrundelegung der Speicheradressen (5) auf den Datenspeicher (6) zugegriffen und dessen Inhalt (7) zur Steuerung (8, 9, 10) der Lichtquelle ausgelesen wird.

2. Verfahren nach Anspruch 1, **dadurch gekennzeichnet, dass** die Änderung der Position, der Orientierung und/oder der Gestalt der Probe in einer Verschiebung, einer Drehung, einer Stauchung und/oder einer Dehnung der Probe selbst resultiert.

3. Verfahren nach Anspruch 1 oder 2, **dadurch gekennzeichnet, dass** mit der Transformation der Koordinaten (2, 3) der zu beleuchtenden Bildpunkte die Positions-, Orientierungs- und Gestaltsänderung der Probe oder der ROI nachgebildet wird.

4. Verfahren nach einem der Ansprüche 1 bis 3, **dadurch gekennzeichnet, dass** die Transformation konforme Abbildungen (12), insbesondere Verschiebungen (13), Drehungen (16) und Skalierungen (19), umfasst.

5. Verfahren nach einem der Ansprüche 1 bis 4, **dadurch gekennzeichnet, dass** mit der Transformation die Koordinaten (2, 3) der zu beleuchtenden Bildpunkte in Punkte (20, 21) im Bildbereich der ROI oder in einem Referenzbild allgemein überführt werden.

6. Verfahren nach einem der Ansprüche 1 bis 5, **dadurch gekennzeichnet, dass** die Probe mehrere ROI umfasst.

7. Verfahren nach einem der Ansprüche 1 bis 6, **dadurch gekennzeichnet, dass** für jede ROI eine separate Transformationsvorschrift (13, 16, 19) gebildet wird, wobei die einzelnen Transformationsvorschriften (13, 16, 19) im Allgemeinen unterschiedlich aufgebaut und parametriert werden.

8. Verfahren nach einem der Ansprüche 1 bis 7, **dadurch gekennzeichnet, dass** die Parameter der Transformation (13, 16, 19) automatisch, kontinuierlich und/oder in Echtzeit an die Änderung der Probe oder der ROI angepasst werden.

9. Verfahren nach einem der Ansprüche 1 bis 8, **dadurch gekennzeichnet, dass** mittels einer Kamera im zeitlichen Anlauf Bilder von der Probe oder von Teilen der Probe aufgenommen werden und dass mit einem Bildverarbeitungssystems eine Analyse der aufgenommen Bilder durchgeführt wird, um mit einem System die geänderten Parameter zu bestimmen.

10. Verfahren nach einem der Ansprüche 1 bis 9, **dadurch gekennzeichnet, dass** die Parameter der Transformation zwischen dem System zur Bestimmung der geänderten Parameter und dem System zur Transformation über gemeinsam genutzte Register ausgetauscht werden.

11. Verfahren nach einem der Ansprüche 1 bis 10, **dadurch gekennzeichnet, dass** der Datenspeicher (6) in mehrere Speicherbereiche unterteilt wird und dass alle oder zumindest einige der ROI einer Probe in getrennte Speicherbereiche abgebildet werden.

12. Verfahren nach einem der Ansprüche 1 bis 11, **dadurch gekennzeichnet, dass** die Steuerung (8, 9, 10) der Lichtquelle die Veränderung der Intensität, des Spektrums und/oder der Formgebung eines von der Lichtquelle ausgesandten Lichtbündels umfasst.

13. Verfahren nach einem der Ansprüche 1 bis 12, **dadurch gekennzeichnet, dass** die einzelnen Parameter zur Steuerung (8, 9, 10) der Lichtquelle in dem Datenspeicher (6) abgelegt sind und vorzugsweise zur Laufzeit oder zumindest über einige Abtastzyklen nicht verändert werden.

14. Verfahren nach einem der Ansprüche 1 bis 13, **dadurch gekennzeichnet, dass** bei sich überschneidenden ROI für jede dieser ROI ein Satz von Parametern zur Steuerung (8, 9, 10) der Lichtquelle bestimmt wird und die Steuerung (8, 9, 10) der Lichtquelle basierend auf dem Mittelwert oder der Summe der einzelnen Werte erfolgt.

15. Verfahren nach einem der Ansprüche 1 bis 14, **dadurch gekennzeichnet, dass** ein ermittelter Parameter zur Steuerung (8, 9, 10) der Lichtquelle, insbesondere bei zu beleuchtenden Bildpunkte mit sich überschneidenden ROI, auf einen Bereich zwischen einem Minimal- und einem Maximalwert begrenzt wird.

## Claims

1. Method for illuminating a specimen or a region of the specimen (Region Of Interest, ROI) by means of a confocal microscope, the information as to whether and in what manner a specific point on the specimen is to be illuminated being deposited in a data store (6) under a specific address (5), **characterised in that** an alteration in the position, orientation and/or shape of the specimen as a result of movements inside the specimen is recorded in the form of images and **in that** a transformation (13, 16, 19) of the co-ordinates (2, 3) of the image points to be illuminated results therefrom by means of a transformation rule, the transformation rule describing the alteration in the specimen relative to an earlier state of the specimen, and the transformation rule being adapted (11) in real time in dependence on the alteration in the specimen, **in that** storage addresses (5) are associated (4) uniquely with the transformed co-ordinates (20, 21) and **in that**, taking the storage addresses (5) as a basis, the data store (6) is accessed and the contents (7) thereof are read out in order to control (8, 9, 10) the light source.

2. Method according to claim 1, **characterised in that** the alteration in the position, orientation and/or shape of the specimen results in a translation, a rotation, a compression and/or an expansion of the specimen itself.

3. Method according to claim 1 or 2, **characterised in that**, with the transformation of the co-ordinates (2, 3) of the image points to be illuminated, the alteration in the position, orientation and shape of the specimen or of the ROIs is copied.

4. Method according to any one of claims 1 to 3, **characterised in that** the transformation comprises conformal mappings (12), especially translations (13), rotations (16) and scalings (19).

5. Method according to any one of claims 1 to 4, **characterised in that,** with the transformation, the co-ordinates (2, 3) of the image points to be illuminated are converted into points (20, 21) in the image region of the ROIs or in a reference image generally.

6. Method according to any one of claims 1 to 5, **characterised in that** the specimen comprises several ROIs.

7. Method according to any one of claims 1 to 6, **characterised in that** a separate transformation rule (13, 16, 19) is formed for each ROI, the individual transformation rules (13, 16, 19) generally being differently constructed and parameterised.

8. Method according to any one of claims 1 to 7, **characterised in that** the parameters of the transformation (13, 16, 19) are adapted automatically, continuously and/or in real time to the alteration in the specimen or the ROIs.

9. Method according to any one of claims 1 to 8, **characterised in that** images of the specimen or portions of the specimen are recorded by means of a camera in temporal sequence and **in that** an analysis of the recorded images is carried out using an image-processing system in order to determine the altered parameters using a system.

10. Method according to any one of claims 1 to 9, **characterised in that** the parameters of the transformation are exchanged between the system for determining the altered parameters and the system for transformation by means of shared registers.

11. Method according to any one of claims 1 to 10, **characterised in that** the data store (6) is divided into several storage regions and **in that** all or at least some of the ROIs of a specimen are mapped into separate storage regions.

12. Method according to any one of claims 1 to 11, **characterised in that** the control (8, 9, 10) of the light source comprises changing the intensity, the spectrum and/or the shaping of a light beam transmitted from the light source.

13. Method according to any one of claims 1 to 12, **characterised in that** the individual parameters for controlling (8, 9, 10) the light source are deposited in the data store (6) and are preferably not altered for the operating time or at least over a few scanning cycles.

14. Method according to any one of claims 1 to 13, **characterised in that,** in the case of overlapping ROIs, a set of parameters for controlling (8, 9, 10) the light source is determined for each of those ROIs and the control (8, 9, 10) of the light source takes place on the basis of the average value or the sum of the individual values.

15. Method according to any one of claims 1 to 14, **characterised in that** an ascertained parameter for controlling (8, 9, 10) the light source, especially in the case of image points to be illuminated having overlapping ROIs, is limited to a range between a minimum value and a maximum value.

## Revendications

1. Procédé d'éclairage d'un échantillon ou d'une zone de l'échantillon (ROI, Region Of Interest) au moyen d'un microscope confocal l'information, savoir si et de quelle manière un point particulier sur l'échantillon doit être éclairé est introduit dans une mémoire (6) à une adresse particulière,
**caractérisé en ce que** une modification de position, d'orientation et/ou de forme par suite de mouvements à l'intérieur de l'échantillon est enregistrée sous forme d'image et **en ce qu'**à partir de cela, s'effectue une transformation (13, 16, 19) des coordonnées (2, 3) des points d'image à éclairer au moyen d'une instruction de transformation, l'instruction de transformation décrivant la modification de l'échantillon par rapport à un état antérieur de l'échantillon et l'instruction de transformation étant adaptée en temps réel (11) en fonction de la modification de l'échantillon, **en ce que** des adresse de mémoire (5) sont affectées de façon univoque (4) aux coordonnées transformées (20, 21) et **en ce que**, sur la base des adresses de mémoire (5), on accède à la mémoire (6) et on lit son contenu (7) pour commander (8, 9, 10) la source de lumière.

2. Procédé selon la revendication 1, **caractérisé en ce que** la modification de la position, de l'orientation et/ou de la forme de l'échantillon donne lieu à une translation, une rotation, une torsion et/ou une dilatation de l'échantillon.

3. Procédé selon l'une des revendications 1 et 2, **caractérisé en ce que** la modification de la position, de l'orientation et/ou de la forme de l'échantillon ou de la ROI est reconstituée avec la transformation des coordonnées (2, 3) du point d'image à éclairer.

4. Procédé selon l'une des revendications 1 à 3, **caractérisé en ce que** les reproductions conformes à la transformation (12) comprennent en particulier des translations (13), des rotations (16) et des mises à l'échelle(19).

5. Procédé selon l'une des revendications 1 à 4, **caractérisé en ce qu'**avec la transformation, les coordonnées (2, 3) des points d'image à éclairer sont généralement transformés en points (20, 21) dans la zone d'image des ROI ou dans une image de référence.

6. Procédé selon l'une des revendications 1 à 5, **caractérisé en ce que** l'échantillon comporte plusieurs ROI.

7. Procédé selon l'une des revendications 1 à 6, **caractérisé en ce que,** pour chaque ROI, une instruction de transformation ( 13, 16, 19) est formée, chacune des instruction de transformation ( 13, 16, 19) étant généralement adaptée, automatiquement, en continu et/ou en temps réel à la modification de l'échantillon et paramétrée.

8. Procédé selon l'une des revendications 1 à 7, **caractérisé en ce que** les paramètres de la transformation (13, 16, 19) sont adaptés, automatiquement, en continu et/ou en temps réel à la modification de l'échantillon ou du ROI.

9. Procédé selon l'une des revendications 1 à 8, **caractérisé en ce que** des photos de l'échantillon ou de parties de l'échantillon sont prises à intervalles dans le temps au moyen d'une caméra et **en ce qu'**une analyse des photos prises est effectuée au moyen d'un système d'élaboration d'images pour définir avec un système les paramètres modifiés.

10. Procédé selon l'une des revendications 1 à 9, **caractérisé en ce que** les paramètres de la transformation sont échangés entre le système pour définir les paramètres modifiés et le système de transformation au moyen de registres communs.

11. Procédé selon l'une des revendications 1 à 10, **caractérisé en ce que** la mémoire (6) est divisée en plusieurs zones de mémoire et **en ce que** toutes, ou au moins quelques unes, des ROI d'un échantillon sont reconstituées dans des zones de mémoire séparées.

12. Procédé selon l'une des revendications 1 à 11, **caractérisé en ce que** la commande (8, 9, 10) de la source de lumière comporte la modification de l'intensité, du spectre et/ou de la forme du faisceau lumineux émis par la source de lumière.

13. Procédé selon l'une des revendications 1 à 12, **caractérisé en ce que** chacun des paramètres de la commande (8, 9, 10) de la source de lumière est stocké dans la mémoire (6) et de préférence ne sont pas modifiés durant le temps de fonctionnement ou du moins pendant quelque cycles de balayage.

14. Procédé selon l'une des revendications 1 à 13, **caractérisé en ce que** lorsque plusieurs ROI se chevauchent, un jeu de paramètres pour la commande (8, 9, 10) de la source de lumière est déterminé pour chacune de ces ROI et la commande de la source de lumière s'effectue sur la base de la valeur moyenne ou de la somme de chacune des valeurs.

15. Procédé selon l'une des revendications 1 à 14, **caractérisé en ce qu'**un paramètre déterminé pour la commande (8, 9, 10) de la source de lumière, notamment pour des points à éclairer avec des ROI se chevauchant, est limité dans une plage entre une valeur minimum et une valeur maximum.
